# EUROPEAN PATENT SPECIFICATION

(11) **EP 1 473 149 B1**
(45) Date of publication and mention of the grant of the patent: **14.05.2008**
(21) Application number: 04010383.0
(22) Date of filing: 30.04.2004
(51) Int. Cl.: B32B 15/08, C22C 38/00, B32B 27/08, B32B 27/32, B32B 27/36, B32B 27/34

(54) **Heavy-duty anticorrosive coated steel material with excellent resistance against separation and corrosion**
Korrosionsbestaendiger hochbeanspruchbarer Stahl mit hervorragender Abloese- und Korrosionsbestaendigkeit
Matériau revêtu d'acier anticorrosif et de haute resistance ayant une excellente résistance à la corrosion et à la separation

(30) Priority: 30.04.2003 JP 2003125745; 30.04.2003 JP 2003125746
(43) Date of publication of application: 03.11.2004
(73) Proprietor: Nippon Steel Corporation, Tokyo 100-8071 (JP)
(72) Inventor: Yoshizaki, Nobuki, Kimitsu-shi, Chiba 299-1141 (JP); Harada, Yoshiyuki, Futtsu-shi, Chiba 293-8511 (JP); Mimura, Hiroyuki, Kimitsu-shi, Chiba 299-1141 (JP); Yamamoto, Masahiro, Futtsu-shi, Chiba 293-8511 (JP)
(74) Representative: Vossius & Partner

(56) References cited:
- WO-A-95/03136
- US-A- 4 774 105
- DATABASE WPI Section Ch, Week 199916 Derwent Publications Ltd., London, GB; Class A14, AN 1999-185119 XP002293311 & JP 11 034228 A (SUMITOMO METAL IND LTD) 9 February 1999 (1999-02-09)
- DATABASE WPI Section Ch, Week 200143 Derwent Publications Ltd., London, GB; Class A18, AN 2001-400987 XP002293312 & JP 2001 047550 A (KAWASAKI STEEL CORP) 20 February 2001 (2001-02-20)
- DATABASE WPI Section Ch, Week 199216 Derwent Publications Ltd., London, GB; Class A94, AN 1992-128436 XP002305323 & JP 04 071842 A (NIPPON STEEL CORP) 6 March 1992 (1992-03-06)
- DATABASE WPI Section Ch, Week 199217 Derwent Publications Ltd., London, GB; Class A82, AN 1992-137196 XP002305324 & JP 04 078530 A (NIPPON STEEL CORP) 12 March 1992 (1992-03-12)
- DATABASE WPI Section Ch, Week 199148 Derwent Publications Ltd., London, GB; Class A82, AN 1991-349926 XP002305325 & JP 03 234527 A (NIPPON STEEL CORP) 18 October 1991 (1991-10-18)
- DATABASE WPI Section Ch, Week 199217 Derwent Publications Ltd., London, GB; Class A82, AN 1992-137197 XP002305326 & JP 04 078531 A (NIPPON STEEL CORP) 12 March 1992 (1992-03-12)

## Description

The present invention relates to a heavy-duty anticorrosive coated steel material applied with a heavy-duty anticorrosive coating, by a lamination or painting method, where little separation develops at the coating end part, or a flawed part, of the steel material and excellent corrosion resistance is maintained over a long period of time.

A heavy-duty anticorrosive coating is essential for a steel material used in severe corrosive environments such as at sea. The heavy-duty anticorrosive coating is expected to endure over tens of years and therefore, an enhancement of its reliability is required. In the heavy-duty anticorrosive coating, the plastic used for the coating has a very high durability and, to maintain this function, the separation resistance in the coating end part or a flawed part is important. Furthermore, as the heavy-duty anticorrosive coating is used in combination with cathodic protection, cathodic disbonding resistance is also important. when the steel material is a steel pipe sheet pile or a deformed steel sheet pile, the anticorrosive layer is formed by thick painting due to its complicated shape. Also, although the shape is not complicated, some steel sheet piles or steel pipe piles are applied with a thick paint coating.

Steel materials used in severe corrosive environments, such as in a marine steel structure, are applied with anticorrosive paint and in particular, a heavy-duty anticorrosive coating with a thickness as large as a few mm is effective. In the case where long-term durability over tens of years is necessary, a heavy-duty anticorrosive coated steel material is produced by using, as the covering material, a resin such as polyolefin and polyurethane which are inexpensive resins excellent in various corrosion protections such as electrical insulating property and chemical resistance. In the heavy-duty anticorrosive coating, as described in Japanese Unexamined Patent Publication (Kokai) No. 3-23527, the anticorrosive coating is combined with special surface treatment and primer treatment of a steel material to ensure long-term adhesion durability. In the case of a steel material having a complicated shape, such as steel pipe sheet pile, coating or attachment using polyolefin is difficult and therefore, paint coating using polyurethane is employed.

Similarly, in the case where long-term corrosion resistance is required of line pipes or the like, a heavy-duty anticorrosive coated steel pipe covered with a polyolefin resin is used. The pipe is used by laying it underground in many cases and therefore, in the case of a resin-coated steel pipe, with the assumption that a perforating flaw may be generated during transportation or construction work, cathodic protection is applied in combination so as to prevent the steel material from corroding in the flawed part. However, the cathodic protection causes cathodic disbonding which gives rise to a decrease in the adhesive strength of the coating in the periphery of flaw. Therefore, cathodic disbonding resistance is important for the heavy-duty anticorrosive coated steel pipe used for line pipes. To satisfy this requirement, the cathodic disbonding resistance has been heretofore enhanced by applying a chromate treatment or a resin primer treatment as the surface treatment while leaving the heavy-duty anticorrosive coating as it is. For example, Japanese Examined Patent Publication (Kokoku) No. 3-66393 discloses a technique of using phosphoric acid chromate as the chromate treating agent for use in the surface treatment to improve the cathodic disbonding at high temperatures.

With respect to the method for improving the durability of anticorrosive coating other than the surface treatment, a method of further stacking an anticorrosive metal such as titanium on the surface layer to improve the surface strength and enhance the scratch resistance and reliability of coating by completely blocking the deterioration factors such as light, oxygen and water has been proposed. However, the method of coating an anticorrosive metal on the surface layer is disadvantageous in view of productivity or material cost or in that the problem of latitude in the shape of a steel material used is difficult to overcome.

The chemical conversion treatment in the surface treatment step for the heavy-duty anticorrosive coating is predominately a chromate treatment but, in the chemical conversion treatment not containing a chromium compound, satisfactory performance cannot be easily ensured. On the other hand, the method of attaching, to the surface, an anticorrosive metal capable of enhancing the long-term durability of heavy-duty anticorrosive coating is difficult to use as a general anticorrosive method, because this method can be hardly applied to structures other than steel pipes and the anticorrosive metal itself is expensive. Thus, another technique for enhancing the durability at a low cost is required.

The polyolefin or polyurethane resin used at present for the heavy-duty anticorrosive coating is inexpensive, exhibits excellent durability and has high reliability based on performance in actual environments. Furthermore, the coating of such a resin is a thick film of a few mm and therefore, the scratch resistance is high as compared with general painting, When a polyolefin or polyurethane resin is coated to a thickness of a few mm, water, oxygen or ionic components, in an amount causing corrosion of a steel material, can be blocked on the anticorrosive coating surface and prevented from reaching the steel material. However, as a water content or oxygen, even in a trace amount causing no corrosion, has a possibility of reducing the adhesive strength between the steel material and the resin, the heavy-duty anticorrosive coating must be combined with excellent surface treatment and primer treatment so as to maintain adhesion performances such as adhesion durability and separation resistance. For inhibiting the permeation through the coating, a method of increasing the thickness of the anticorrosive coating may be considered, but this is very inefficient. Furthermore, the increase in the thickness has a problem in that the internal stress of the coating also increases and acts as a factor for separation and an effect proportional to the thickness cannot be obtained.

Under these circumstances, in the present invention, a note is taken of an improvement in the resin material which is considered to give sufficiently high corrosion resistance in conventional thick heavy-duty anticorrosive coating and, by combining a thin film having an oxygen permeation-inhibiting function with a conventional anticorrosive layer, a heavy-duty anticorrosive coating free from a problem in cost or internal stress and favored with excellent separation resistance is provided. This object can be achieved by the features defined in the claims.

That is, the present invention provides the followings.
[1] A heavy-duty anticorrosive coated steel material comprising:
   a steel material,
   an anticorrosive coating layer on the surface of the steel material, and
   an oxygen-blocking resin layer between the steel material and the anticorrosive coating layer or on the surface of the anticorrosive coating layer, the oxygen-blocking resin layer being adjusted to an oxygen permeability of 100 cm³ (standard)/m²·day·atm (20°C) or less.
[2] The heavy-duty anticorrosive coated steel material as described in [1] above, wherein the oxygen-blocking resin layer is a resin sheet having a thickness of 10 to 500 µm laminated on the anticorrosive resin layer by using an adhesive layer.
[3] The heavy-duty anticorrosive coated steel material as described in [1] above, wherein the oxygen-blocking resin layer is a resin paint film having a thickness of 50 to 1,000 µm coated on the anticorrosive resin layer through a resin primer treatment layer.
[4] The heavy-duty anticorrosive coated steel material as described in any one of [1] to [2] above, wherein the oxygen-blocking resin layer is formed of a resin selected from polyvinyl chloride, polyvinylidene chloride, polyester, polyamide and polyvinyl alcohol.
[5] The heavy-duty anticorrosive coated steel material as described in [3] above, wherein the oxygen-blocking resin layer is formed of a resin selected from the group consisting of polyol, polyurethane, polyvinylidene chloride, polyvinyl alcohol, epoxy and modified resins thereof.
[6] The heavy-duty anticorrosive coated steel material as described in any one of [1] to [5] above, wherein the oxygen-blocking resin layer is adjusted to an oxygen permeability of 40 cm³ (standard)/m²·day·atm (20°C) or less.
[7] The heavy-duty anticorrosive coated steel material as described in any one of [1] to [6] above, wherein the anticorrosive resin layer is a resin sheet having a thickness of 0.3 to 5 mm laminated on the surface of the steel material by using an adhesive layer.
[8] The heavy-duty anticorrosive coated steel material as described in any one of [1] to [6] above, wherein the anticorrosive resin layer is a resin paint film having a thickness of 0.5 to 6 mm coated on the surface of the steel material through a resin primer treatment layer.
[9] The heavy-duty anticorrosive coated steel material as described in [8] above, wherein the resin primer treatment layer is formed by adding a curing agent and an inorganic pigment to a thermoplastic resin and curing the resin.
[10] The heavy-duty anticorrosive coated steel material as described in any one of [1] to [9] above, wherein the anticorrosive coating layer is a polyolefin or polyolefin copolymer resin layer.
[11] The heavy-duty anticorrosive coated material as described in any one of [1] to [6], wherein the anticorrosive layer is a polyurethane or polyurea resin layer.
[12] The heavy-duty anticorrosive coated steel material as described in any one of [1] to [10] above, which has a surface treatment layer on the surface of the steel material.
[13] The heavy-duty anticorrosive coated steel material as described in [12] above, wherein the surface treatment layer is a chemical conversion layer not containing a chromium compound.
[14] The heavy-duty anticorrosive coated steel material as described in any one of [1] to [13] above, wherein a colored sheet is further stacked on the oxygen-blocking resin layer.
[15] The heavy-duty anticorrosive coated steel material as described in any one of [1] to [13] above, wherein a colored paint is further applied on the oxygen-blocking resin layer.
[16] A heavy-duty anticorrosive coated steel material comprising:
   a steel material
   a surface treatment layer on the surface of the steel material,
   a resin primer treatment layer on the surface treatment layer,
   an anticorrosive resin sheet having a thickness of 500 µm or more, and
   an oxygen-blocking resin sheet on the anticorrosive resin sheet, the oxygen-blocking resin sheet having a thickness of 10 to 500 µm and adjusted to an oxygen permeability of 100 cm³ (standard)/m²·day·atm (20°C) or less.
[17] A heavy-duty anticorrosive coated steel material comprising:
   a steel material
   a surface treatment layer on the surface of the steel material,
   a resin primer treatment layer on the surface treatment layer,
   an anticorrosive resin layer having a thickness of 500 µm or more, and
   an oxygen-blocking resin paint film on the anticorrosive resin layer, the oxygen-blocking resin paint film having a thickness of 50 to 1000 µm and adjusted to an oxygen permeability of 100 cm³ (standard)/m²·day·atm (20°C) or less.

The invention is described in detail in conjunction with the drawings, in which;
Fig. 1 is a cross-sectional view showing one example of the coating constitution of a heavy-duty anticorrosive coated steel material according to the present invention,
Fig. 2 is a cross-sectional view showing another example of the coating constitution of a heavy-duty anticorrosive coated steel material according to the present invention,
Fig. 3 is a cross-sectional view showing still another example of the coating constitution of a heavy-duty anticorrosive coated steel material according to the present invention, and
Fig. 4 is a cross-sectional view showing still another example of the coating constitution of a heavy-duty anticorrosive coated steel material according to the present invention.

The heavy-duty anticorrosive coated steel material with excellent separation resistance of the present invention has, in the inside or on the surface of the anticorrosive coating, an oxygen-blocking layer adjusted to an oxygen permeability of 100 cm³ (standard)/m²·day·atm (20°C) or less.

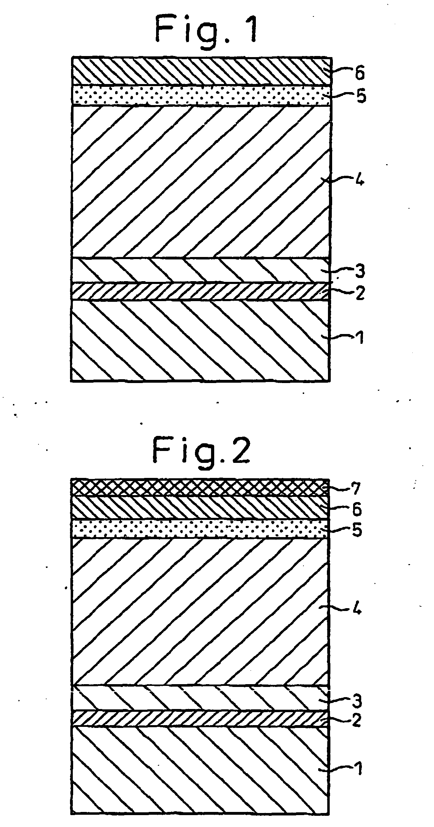

with respect to the coating constitution thereof, for example, as shown in the cross-sectional view of Fig. 1, a surface treatment layer 2 (a shot blast treatment or the like is of course not present as a layer, but in the present invention, this is also included), a primer layer 3, an anticorrosive resin coating layer 4, an adhesive layer 5 and an oxygen-blocking sheet (film) layer 6 are sequentially stacked on the surface of a steel material 1. In the case where the weather resistance of the surface layer sheet is important, as shown in Fig. 2, a colored sheet layer 7 is further stacked on the surface of the oxygen-blocking sheet layer 6 to work as a protective layer having excellent weather resistance. Each sheet of the anticorrosive resin coating layer 4 and the adhesive layer 5 is stacked by using heat lamination, a pressure-sensitive adhesive or an adhesive. The anticorrosive resin layer 3 is preferably a coating of modified polyolefin alone, a two-layer coating consisting of a modified polyolefin adhesive layer and polyolefin, or a polyurethane-based resin coating. By such a lamination coating, a heavy-duty anticorrosive coated steel material with excellent separation resistance is provided.

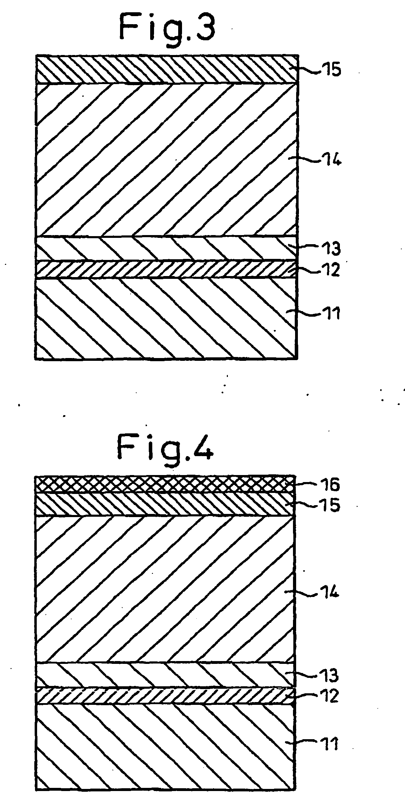

Alternatively, for example, as shown in the cross-sectional view of Fig. 3, a surface treatment layer 12 (a shot blast treatment or the like is of course not present as a layer, but in the present invention, this is also included), a primer layer 13, an anticorrosive resin paint coating layer 14 and an oxygen-blocking paint layer 15 are sequentially stacked on the surface of a steel material 11. In the case where the weather resistance of the oxygen-blocking paint layer is important, as shown in Fig. 4, a silicon-, acryl- or fluorine-based colored paint 16 with excellent weather resistance is further applied to the surface thereof to work as a protective layer having excellent weather resistance. By such stacking and coating, a heavy-duty anticorrosive coated steel material with excellent separation resistance is provided.

The steel material for use in the present invention is a common steel, a steel material controlled in C, Si, Mn, nitrogen and oxygen, or an alloy steel obtained by adding an element such as Cu, Ni, Cr, Mo, Nb, Ti, Al, Mg, v and Ca. Representative examples of the form thereof include a steel pipe to be applied with a heavy-duty anticorrosive coating, and steel pipe pile, steel pipe sheet pile, steel sheet pile, H-type steel and wire rod which are used in marine structures or the like.

In order to remove scales, contaminants and the like on the surface, such a steel material is usually subjected to any one surface treatment such as alkali degreasing-acid washing, sand blast treatment, grid blast treatment and shot blast treatment.

Also, in order to enhance the performance, the steel material may be further subjected to a chemical conversion treatment and in the case where high performance is required, a chromate treatment is performed. Even if the chemical conversion treatment is not a chromate treatment but is a chromium compound-free treatment, a zinc phosphate treatment or other water-soluble chemical conversion treatment, when the heavy-duty anticorrosive coating of the present invention is applied, this can be expected to provide a performance equal to or greater than the heavy-duty anticorrosion coating having a conventional coating constitution using chromate.

The heavy-duty anticorrosive coating of the present invention, which is applied after the surface treatment, is described below. First, a primer treatment is preferably performed so as to strengthen the adhesion between the anticorrosive coating and the steel material and enhance the resistance against cathodic disbonding and corrosion. For the primer, a thermosetting resin may be used. An epoxy resin, a polyurethane resin, a polyester resin or a modified product thereof, where a curing agent and an inorganic pigment are added, is preferably used as the main component. The polyurethane resin representatively includes a moisture-curable one-liquid type resin using a prepolymer, and a two-liquid curing type resin utilizing a reaction between isocyanate and polyol. In the case of using an epoxy resin for the primer, bisphenol A-type and bisphenol F-type resins are generally used individually or in combination as the main component. when high-temperature properties are required, a polyfunctional phenol novolak or halogenated resin is used in combination with the above-described bisphenol A-type or bisphenol F-type resin.

For the curing agent, a two-liquid curing-type amine-based curing agent, an imidazole compound as a latent curing agent together with dicyandiamide, and a phenol-based curing agent are used individually or in combination and when such a curing agent used, excellent adhesion and corrosion resistance can be obtained. Also, when an inorganic pigment is added in the range from 3 to 30 vol% based on the entire volume, the shrinkage distortion is reduced and the adhesion property can be greatly improved. For the inorganic pigment, a pigment such as silica, titanium oxide, wollastonite, mica, talc kaolin, chromium oxide, zinc borate and zinc phosphate, or a rust-preventive pigment such as metal powder (e.g., zinc, Al), ceramic powder and vanadium phosphate, may be appropriately used. The surface of such a pigment may be subjected to a silane coupling treatment so as to have good wettability with the resin. In the case of supplying the resin primer in the liquid form, a method such as roll or brush painting, squeeze coating and air spray painting may be used. In the case of supplying it in the powder form, the resin primer may be painted by a method such as electrostatic powder painting to a thickness of 20 to 1,000 µm. If the thickness is less than 20 µm, many pinholes are generated. On the other hand, the upper limit of thickness varies depending on the resin, but if the thickness exceeds 500 µm, the impact resistance at low temperatures is liable to decrease.

The heavy-duty anticorrosive coating may be formed by either a lamination method or a painting method.

In the case of forming the heavy-duty anticorrosive coating by a lamination method, the polyolefin resin suitably used therefor is a resin containing, as the main component, a conventionally known polyolefin such as low-density polyethylene, medium-density polyethylene, high-density polyethylene, linear low-density polyethylene and polypropylene, or a known polyolefin copolymer such as ethylene-propylene block or random copolymer and polyamide-propylene block or random copolymer. As for other components, carbon black or other coloring pigments for imparting resistance against heat and weather, a filling reinforcement, an antioxidant, an ultraviolet absorbent, a hindered amine-based weatherproofing agent and the like may be added in an arbitrary combination. In the case of using a polyolefin resin for the coating, a modified polyolefin adhesive may be used for the lower layer portion which comes into contact with the underlying primer.

This adhesive may be a conventionally known modified polyolefin obtained by, for example, modifying a known polyolefin such as polyethylene, polypropylene and nylon, or a known polyolefin copolymer resin, with an unsaturated carboxylic acid such as maleic acid, acrylic acid and methacrylic acid, or an acid anhydride thereof, or by appropriately diluting the modified product with a polyolefin resin. A method of using a polyolefin. resin layer of 0.3 to 5 mm in combination with a thin modified polyolefin adhesive layer of 50 to 700 µm is preferred in view of cost and balance of performances but, by omitting the polyolefin coating layer, a modified polyolefin resin layer may be coated to 0.3 mm or more and used as the anticorrosive layer.

For the coating of polyolefin, for example, an extrusion coating method of coating a resin heat-melted in a die directly on a steel material may be used. Alternatively, a method of attaching a previously shaped polyolefin sheet on a heated steel material, or a method of powder-painting a ground polyolefin and melting it to form a film may be used. By such a method, a polyolefin anticorrosive coating layer having a thickness of 0.3 mm or more is formed.

The heavy-duty anticorrosive painting of the present invention, which may be applied after the surface treatment, is described below. First, a primer treatment is performed so as to strengthen the adhesion between the anticorrosive paint coating and the steel material and enhance the resistance against cathodic disbonding and corrosion. This treatment is the same as above.

After the primer treatment, heavy-duty anticorrosive painting may be performed. The resin used for the painting is a polyurethane resin or a polyurea resin. in the case of polyurethane resin, two liquids consisting of a main agent comprising a mixture of polyol, filling inorganic pigment and coloring pigment, and a curing agent comprising an isocyanate compound are mixed and painted. The polyol which can be used include polyester polyol, polybutadiene polyol, polyether polyol such as polypropylene glycol, acryl polyol, castor oil derivatives and other hydroxyl group-containing compounds. The isocyanate which can be used includes commonly and commercially available isocyanates such as methylenediphenyl diisocyanate. The filling inorganic pigment which can be used includes commonly and commercially available inorganic pigments such as silica, titanium oxide and kaolin clay. As the coloring pigment, carbon black is generally used so as to impart weather resistance to the resin. In the case of using other coloring pigments in view of design property, an ultraviolet absorbent may be used in combination. The coating thickness is preferably from 0.5 to 6 mm by taking account of function as the heavy-duty anticorrosive layer and profitability.

Regarding the oxygen-blocking layer incorporated into the inside or surface layer of the heavy-duty anticorrosive coating layer in the present invention, in the case of using a resin sheet (film), it is important to use a resin sheet having a thickness of preferably 10 to 500 µm, more preferably 10 to 200 µm and adjusted to an oxygen permeability of 100 cm³ (standard)/m²·day·atm (20°C) <according to the measuring method of JIS K7126> or less. The oxygen permeability is advantageously smaller as the film thickness is larger, but if the thickness is large, the shape-followability and adhesive property are worsened. Accordingly, the thickness is 500 µm at most. As for the kind of resin, the object of the present invention is more successfully obtained as the oxygen permeation coefficient is smaller, but the resin is selected by taking account of its flexibility, strength and adhesive property. Examples of the resin having a small oxygen permeation coefficient include polyvinyl chloride, polyvinylidene chloride, polyester (e.g., polyethylene terephthalate, -[OCH₂CH₂OOC-(C₆H₄)-CO]ₙ-), nylon and polyvinyl alcohol. However, even in the case of a resin film of the same species, the oxygen permeation coefficient can be made smaller by the molecular structure, additive or stretching. Also, a multilayer laminate product obtained by laminating and stacking several different resin sheets may be used.

The oxygen-blocking sheet is laminated in the inside or on the surface of the anticorrosive layer through an adhesive. The adhesive used for the lamination is greatly affected by the kind of resin combined and those imparted with tackiness are preferred. The adhesive which can be used includes resins such as modified polyolefin, acryl type, silicon type, rubber type and polyurethane type. With respect to the process of coating an oxygen-blocking film, for example, a method of forming a heavy-duty anticorrosive coating on a steel material and thereafter, attaching the oxygen-blocking sheet by using a pressure sensitive adhesion-type or heat curing-type adhesive may be used. On the other hand, in the case of polyolefin coating, a step of attaching a polyethylene sheet is used and the oxygen-blocking sheet may be previously laminated with the polyethylene sheet and then attached. Also, in the case of polyolefin coating of a large-diameter steel pipe, a step of winding the sheet extruded from a T die around the steel pipe is generally used and therefore, a method of winding the extruded polyolefin anticorrosive sheet around the steel pipe and at the same time, spirally winding an adhesive-laminated oxygen-blocking sheet around the middle or surface layer of the coating may be used. Whichever method is used, there is no problem as long as the oxygen-blocking sheet of the present invention is attached and laminated.

in another embodiment of the present invention, the oxygen-blocking layer may also be provided by painting on the surface layer of the heavy-duty anticorrosive coating layer. The oxygen-blocking layer has a thickness of preferably 50 to 1,000 µm, more preferably from 50 to 500 µm, and it is important to use a coating material adjusted to give an oxygen permeability of 100 cm³ (standard)/m²·day·atm (20°C) <according to the measuring method of JIS K7126> or less when measured using a paint cured film. The oxygen permeability is advantageously smaller as the film thickness is larger, but if the thickness is large, the shape-followability, adhesive property and profitability are worsened. Accordingly, the thickness is 1,000 µm at most. With respect to the kind of resin used for the coating material, for example, polyol, polyurethane, polyvinylidene chloride, polyvinyl alcohol, epoxy and modified resins thereof such as silicon-modified epoxy and acryl-modified epoxy, may be used. The object of the present invention is more successfully obtained as the oxygen permeation coefficient is smaller, but the resin is selected by taking account of its flexibility, strength and adhesive property. Even in the case of a resin of the same species, the oxygen permeation coefficient is greatly changed by a pigment and therefore, a moisture-resistant pigment such as silica and mica, and a coloring pigment are appropriately added.

The oxygen permeability of the oxygen-blocking resin layer is 100 cm³ (standard)/m²·day·atm (20°C), preferably 40 cm³ (standard)/m²·day·atm (20°C) or less, more preferably 10 cm³ (standard)/m²·day·atm (20°C) or less.

In the case where the oxygen-blocking sheet is the surface layer of the anticorrosive layer, a colored sheet (film) may be further laminated on the surface layer. when the oxygen-blocking sheet is insufficient in the resistance against water or weather, in order to compensate for the function, a resin having excellent resistance against weather or water is preferably used for the surface layer sheet. Examples of the resin include acryl-based resin, fluorine-based resin, polyolefin-based resin and modified polyolefin-based resin.

When the printed layer for blocking oxygen is insufficient in the weather resistance, in order to compensate for the function, a silicon-, acryl- or fluorine-based urethane coating material having excellent weather resistance may be painted on the outermost layer. Also, for the purpose of imparting a scenic design and light-shielding effect, a colored coating material may be used.

### EXAMPLES

### (Example I and Comparative Example I)

A hot-rolled steel sheet of 9×100×150 mm was subjected to a grid blast treatment. Then, samples were divided into a group which was not subjected to a chemical conversion treatment, a group which was subjected to a partial reduction chromate treatment containing fine particle silica, and a group which was subjected to a chemical conversion treatment containing a water-soluble emulsion resin and a silica component. Thereafter, an epoxy resin primer was painted on each sample to a thickness of 50 µm and heat-cured and then, a powder adhesive produced by grinding a modified polyolefin resin was coated to a thickness of 300 µm and heat-melted. Subsequently, a sheet obtained by heat-laminating a 2 mm-thick polyethylene sheet and each oxygen-blocking sheet was attached to produce a heavy-duty anticorrosive coated steel material having an oxygen-blocking sheet of the present invention. Separately, a sheet obtained by laminating a 0.2 mm-thick titanium foil through a thermoplastic adhesive was attached to produce a heavy-duty anticorrosive coated steel material of Comparative Example.

For the purpose of simulating the separation during long-term use, the produced heavy-duty anticorrosive steel materials each was applied with seal-coating of an epoxy resin on the back surface and then dipped in an artificial sea water at 50°C for 180 days. into the artificial sea water, an air was blown to perform stirring and supply of oxygen. After the test, the polyethylene coating was removed and the distance from the coating end part to the portion where the steel material surface was exposed was measured. On the exposed steel material surface, the adhesive strength was decreased but corrosion was not generated, revealing that there was no problem in view of corrosion resistance despite the reduction in adhesion.

The kind, thickness, distance from the end part to the steel material-exposed surface, and oxygen permeability of each sheet are shown in Table 1. In Sample No. 1 of Comparative Example, which is a heavy-duty anticorrosive coated steel material using a chromate treatment, the adhesion deterioration from the coating end part is less generated. On the other hand, in Sample No. 2 of Comparative Example, where a conventional anticorrosive coating specification is used and a chromate treatment is not applied, the adhesion deterioration distance is increased. However, in Sample No. 3 of Comparative Example, which is a heavy-duty anticorrosive coated steel material having a titanium metal coating, even if a chromate treatment is not applied, the adhesion deterioration distance from the end part is short by virtue of the blocking effect of the coating.

In the case of attaching a sheet to the surface, as is apparent from the results in Sample Nos. 4 to 10 of Comparative Example, when the oxygen permeability of the sheet is out of the range of the present invention, the adhesion deterioration distance is large irrespective of the thickness. However, in Sample Nos. 11 to 23 of Example, the adhesion deterioration distance is greatly decreased. Also, even when a chemical conversion treatment except for chromate treatment is used as in Sample Nos. 24 to 26 of Example, a performance equal to or greater than the anticorrosive coating using a conventional chromate treatment is obtained. Furthermore, in Sample Nos. 27 to 29 of Example using a chromate treatment as the surface treatment, even when a conventional heavy-duty anticorrosive coating in Sample No. 1 of Comparative Example is used, the adhesion deterioration distance can be kept small. In other words, the oxygen permeability of the sheet greatly varies depending on the kind or thickness of the sheet, but when an oxygen-blocking sheet adjusted to an oxygen permeability of 100 cm³ (standard)/m².day.atm (20°C) or less is laminated, the adhesion reduction from the end part can be inhibited and the anticorrosive performance can be enhanced more than with the conventional anticorrosive coating.

**TABLE 1**

| | Sample No. | Surface Treatment | Sheet (Film) | | | Adhesion Deterioration Distance (mm) |
|---|---|---|---|---|---|---|
| | | | Kind of Resin | Thickness (µm) | Oxygen permeability (cm³ /m² day·atm) | |
| Comparative Example I | 1 | chromate treatment | none | 0 | ∞ | 4.5 |
| | 2 | none | none | 0 | ∞ | 17.6 |
| | 3 | none | metal (titanium foil) | 400 | 0 | 2.8 |
| | 4 | none | polystyrene | 400 | 246.3 | 11.9 |
| | 5 | none | polystyrene | 300 | 328.3 | 14.4 |
| | 6 | none | polycarbonate | 300 | 333.5 | 12.8 |
| | 7 | none | polypropylene | 200 | 212.7 | 13.8 |
| | 8 | none | polycarbonate | 200 | 500.3 | 15.2 |
| | 9 | none | polyethylene | 100 | 967.6 | 17.6 |
| | 10 | none | polyvinyl chloride | 100 | 5750 | 18 |
| Example I | 11 | none | ultrahigh molecular polyethylene | 500 | 97.5 | 9.8 |
| | 12 | none | polyvinyl chloride | 500 | 4 | 4.5 |
| | 13 | none | polypropylene | 400 | 81 | 8.8 |
| | 14 | none | acryl | 250 | 2.2 | 5.6 |
| | 15 | none | polyester | 200 | 27.9 | 6.8 |
| | 16 | none | acryl | 125 | 4.4 | 6.8 |
| | 17 | none | PET | 100 | 19.5 | 5.7 |
| | 18 | none | carbon fluoride | 50 | 55.7 | 7.9 |
| | 19 | none | PET | 50 | 39 | 7.5 |
| | 20 | none | nylon | 30 | 8 | 7.2 |
| | 21 | none | PVA/colored polyethylene laminate | 60 | 4 | 5.2 |
| | 22 | none | PET | 30 | 0.5 | 4.6 |
| | 23 | none | polyvinylidene chloride | 25 | 1 | 3.7 |
| | 24 | chemical conversion treatment | ultrahigh molecular polyethylene | 500 | 97.5 | 4.7 |
| | 25 | chemical conversion treatment | PET | 100 | 19.5 | 4.1 |
| | 26 | chemical conversion treatment | polyvinylidene chloride | 25 | 1 | 3.1 |
| | 27 | chromate treatment | ultrahigh molecular polyethylene | 500 | 97.5 | 2.8 |
| | 28 | chromate treatment | PET | 100 | 19.5 | 2.7 |
| | 29 | chromate treatment | polyvinylidene chloride | 25 | 1 | 2.7 |

* PET: polyethylenetelephthalate

### (Example II and Comparative Example II)

A hot-rolled steel sheet of 9×100×150 mm was subjected to a grid blast treatment. Then, samples were divided into a group which was not subjected to a chemical conversion treatment, a group which was subjected to a partial reduction chromate treatment containing fine particle silica, and a group which was subjected to a chemical conversion treatment containing a water-soluble emulsion resin and a silica component. Thereafter, a moisture-curable urethane resin primer using a prepolymer was painted on each sample to a thickness of 40 µm and cured. Then, a main agent comprising a mixture of a polyol, a filling inorganic pigment and a coloring pigment, and a curing agent comprising an isocyanate compound were mixed and painted to form an anticorrosive coating layer. Subsequently, various resins having added thereto a pigment were painted by changing the thickness so that paint coatings differing in the oxygen permeability could be formed. In this way, an oxygen-blocking paint film was formed. Furthermore, in some painted steel materials, a colored fluorine-based urethane coating material was further painted on the surface.

For the purpose of simulating the separation during long-term use, the each produced heavy-duty anticorrosive steel material was applied with seal-coating of an epoxy resin on the back surface and then dipped in an artificial sea water at 50°C for 180 days. Into the artificial sea water, an air was blown to perform stirring and supply of oxygen. After the test, the polyurethane anticorrosive layer was removed and the distance from the coating end part to the portion where the steel material surface was exposed was measured. On the exposed steel material surface, the adhesive strength was decreased but corrosion was not generated, revealing that there was no problem in view of corrosion resistance despite the reduction in adhesion.

The kind, thickness, distance from the end part to the steel material-exposed surface, and oxygen permeability of each oxygen-blocking paint coating are shown in Table 2. The oxygen permeability of each coating material was calculated as an oxygen permeability in terms of film thickness by using data on the oxygen permeability coefficient of an isolated paint film of about 100 µm. In Sample No. 31 of Comparative Example, which is a heavy-duty anticorrosive painted steel material using a chromate treatment, the adhesion deterioration from the coating end part is less generated. On the other hand, in Sample No. 32 of Comparative Example, where a conventional anticorrosive coating specification is used and a chromate treatment is not applied, the adhesion deterioration distance is increased.

Also, as apparent from the results in Sample Nos. 33 to 36 of Comparative Example, even if the anticorrosive layer surface is covered with a paint film, when the oxygen permeability is out of the range of the present invention, the adhesion deterioration distance is large. However, in Sample Nos. 41 to 47 of Example, the adhesion deterioration distance is greatly decreased. Furthermore, even when a chemical conversion treatment except for chromate treatment is used as in Sample No. 48 of Example, a performance equal to or greater than the anticorrosive coating using a conventional chromate treatment is obtained. In addition, in Sample No. 49 of Example using a chromate treatment as the surface treatment, even when a conventional heavy-duty anticorrosive coating in Sample No. 31 of Comparative Example is used, the adhesion deterioration distance can be kept small. In other words, when a paint film adjusted to an oxygen permeability of 100 cm³ (standard)/m²·day·atm (20°C) or less is provided on the anticorrosive layer, the adhesion reduction from the end part can be inhibited and the anticorrosive performance can be enhanced more than the conventional anticorrosive coating.

**TABLE 2**

| | Sample No. | Surface Treatment | Sheet (Film) | | | Adhesion Deterioration Distance (mm) |
|---|---|---|---|---|---|---|
| | | | Kind of Resin | Thickness (µm) | Oxygen Permeability (cm³/m²· day·atm) | |
| Comparative Example II | 31 | chromate treatment | none | 0 | ∞ | 6.3 |
| | 32 | none | none | 0 | ∞ | 13.6 |
| | 33 | none | acryl | 300 | 348 | 11.9 |
| | 34 | none | alkyd | 50 | 1058 | 13.9 |
| | 35 | none | acryl + pigment 20% | 300 | 180 | 12.1 |
| | 36 | none | epoxy A | 30 | 210 | 13.4 |
| Example II | 41 | none | epoxy B | 50 | 73 | 8.5 |
| | 42 | none | polyurethane | 1000 | 6.3 | 6.8 |
| | 43 | none | polyurethane | 500 | 12.6 | 7.3 |
| | 44 | none | polyvinylidone chloride | 100 | 10.1 | 7.0 |
| | 45 | none | polyvinyl alcohol + fluorine-based urethane | 200 | 3.3 | 6.2 |
| | 46 | none | acryl-modified epoxy | 150 | 93 | 9.4 |
| | 47 | none | silicon-modified, epoxy | 100 | 26.3 | 7.5 |
| | 48 | chemical conversion treatment | silicon-modified epoxy | 100 | 26.3 | 5.8 |
| | 49 | chromate treatment | silicon-modified epoxy | 100 | 26.3 | 3.2 |

According to the present invention, an oxygen-blocking layer is incorporated into the heavy-duty anticorrosive coating, whereby the corrosion resistance of conventional heavy-duty anticorrosive coating can be remarkably enhanced. By virtue of the mechanism of largely decreasing the oxygen permeation from the coating surface of oxygen-blocking layer, in the heavy-duty anticorrosive coated steel material of the present invention, the development of adhesion deterioration from the flawed part or end part can be greatly inhibited as compared with conventional heavy-duty anticorrosive coating. As a result, the conventional coating-type chromate treatment as the surface treatment can be omitted or replaced by other chemical conversion treatments not containing a chromium compound.

## Claims

1. A heavy-duty anticorrosion coated steel material, comprising:
a steel material,
a chemical conversion layer not containing a chromium compound on the surface of the steel material,
a heavy-duty anticorrosive coating layer of a polyurethane or polyurea resin coated on the surface of the chemical conversion layer, the anticorrosive coating layer having a thickness of 0.5 to 6 mm, and
an oxygen-blocking resin layer painted on the surface of the anticorrosive coating layer, the oxygen-blocking resin layer being a resin paint film formed of a resin selected from the group consisting of polyol, polyurethane, polyvinylidene chloride, polyvinyl alcohol, epoxy and modified resins thereof, the oxygen-blocking resin layer having a thickness of 50-1,000µm, the oxygen-blocking resin layer having an oxygen permeability of 100 cm³ (standard)/m².day.atm (20°C) or less.

2. A heavy-duty anticorrosion coated steel material, comprising:
a steel material,
a chemical conversion layer not containing a chromium compound on the surface of the steel material,
a heavy-duty anticorrosive coating layer of a polyolefin or polyolefin copolymer resin on the surface of the chemical conversion layer, the anticorrosive coating layer having a thickness of 0.3 to 5 mm, and
an oxygen-blocking resin layer on the surface of the heavy-duty anticorrosive coating layer, the oxygen-blocking resin layer being a resin sheet adhered to the heavy-duty anticorrosive coating layer with an adhesive layer, formed of a resin selected from the group consisting of polyvinyl chloride, polyvinylidene chloride, polyester, polyamide and polyvinyl alcohol and having a thickness of 10-500µm, or a resin paint film formed of a resin selected from the group consisting of polyol, polyurethane, polyvinylidene chloride, polyvinyl alcohol, epoxy and modified resins thereof and having a thickness of 50-1,000 µm, the oxygen-blocking resin layer having an oxygen permeability of 100 cm³ (standard)/m².day.atm (20°C) or less.

3. The heavy-duty anticorrosive coated steel material as claimed in claim 1 or 2, wherein the oxygen-blocking resin layer has an oxygen permeability of 40 cm³ (standard)/m².day.atm (20°C) or less.

4. The heavy-duty anticorrosive coated steel material as claimed in claim 1 or 2, wherein a resin primer treatment layer is further formed between the chemical conversion layer and the heavy-duty anticorrosive coating layer.

5. The heavy-duty anticorrosive coated steel material as claimed in claim 1 or 2, wherein a colored sheet material is further stacked on the oxygen-blocking resin layer.

6. The heavy-duty anticorrosive coated steel material as claimed in claim 1 or 2, wherein a colored paint is further applied on the oxygen-blocking resin layer.

## Patentansprüche

1. Mit hochbeanspruchbarem Korrosionsschutz beschichtetes Stahlmaterial, das aufweist:
ein Stahlmaterial,
eine chemische Konversionsschicht, die keine Chromverbindung enthält, auf der Oberfläche des Stahlmaterials,
eine hochbeanspruchbare Korrosionsschutzbeschichtung aus einem Polyurethan- oder Polyharnstoffharz, mit der die Oberfläche der chemischen Konversionsschicht beschichtet ist, wobei die Korrosionsschutzbeschichtung eine Dicke von 0,5 bis 6 mm hat, und
eine sauerstoffblockierende Harzschicht, die auf die Oberfläche der Korrosionsschutzbeschichtung aufgetragen ist, wobei die sauerstoffblockierende Harzschicht ein Harzanstrichfilm ist, der aus einem Harz gebildet ist, das aus der Gruppe ausgewählt ist, die aus Polyol-, Polyurethan-, Polyvinylidenchlorid-, Polyvinylalkohol-, Epoxid- und deren modifizierten Harzen besteht, die sauerstoffblockierende Harzschicht eine Dicke von 50 bis 1000 µm hat und die sauerstoffblockierende Harzschicht eine Sauerstoffdurchlässigkeit von höchstens 100 cm³ (Normal)/m² · Tag · Atm (20 °C) hat.

2. Mit hochbeanspruchbarem Korrosionsschutz beschichtetes Stahlmaterial, das aufweist:
ein Stahlmaterial,
eine chemische Konversionsschicht, die keine Chromverbindung enthält, auf der Oberfläche des Stahlmaterials,
eine hochbeanspruchbare Korrosionsschutzbeschichtung aus einem Polyolefin- oder Polyolefincopolymerharz auf der Oberfläche der chemischen Konversionsschicht, wobei die Korrosionsschutzbeschichtung eine Dicke von 0,3 bis 5 mm hat, und
eine sauerstoffblockierende Harzschicht auf der Oberfläche der hochbeanspruchbaren Korrosionsschutzbeschichtung, wobei die sauerstoffblockierende Harzschicht folgendes ist: eine Harzbahn, die an der hochbeanspruchbaren Korrosionsschutzbeschichtung mit einer Klebeschicht haftet, aus einem Harz gebildet ist, das aus der Gruppe ausgewählt ist, die aus Polyvinylchlorid, Polyvinylidenchlorid, Polyester, Polyamid und Polyvinylalkohol besteht, und eine Dicke von 10 bis 500 µm hat, oder ein Harzanstrichfilm, der aus einem Harz gebildet ist, das aus der Gruppe ausgewählt ist, die aus Polyol-, Polyurethan-, Polyvinylidenchlorid-, Polyvinylalkohol-, Epoxid- und deren modifizierten Harzen besteht, und eine Dicke von 50 bis 1000 µm hat, wobei die sauerstoffblockierende Harzschicht eine Sauerstoffdurchlässigkeit von höchstens 100 cm³ (Normal)/m² · Tag · Atm (20 °C) hat.

3. Mit hochbeanspruchbarem Korrosionsschutz beschichtetes Stahlmaterial nach Anspruch 1 oder 2, wobei die sauerstoffblockierende Harzschicht eine Sauerstoffdurchlässigkeit von höchstens 40 cm³ (Normal)/m² · Tag · Atm (20 °C) hat.

4. Mit hochbeanspruchbarem Korrosionsschutz beschichtetes Stahlmaterial nach Anspruch 1 oder 2, wobei ferner eine Harzgrundierungsbehandlungsschicht zwischen der chemischen Konversionsschicht und der hochbeanspruchbaren Korrosionsschutzbeschichtung gebildet ist.

5. Mit hochbeanspruchbarem Korrosionsschutz beschichtetes Stahlmaterial nach Anspruch 1 oder 2, wobei ferner ein farbiges Bahnenmaterial auf die sauerstoffblockierende Harzschicht aufgebracht ist.

6. Mit hochbeanspruchbarem Korrosionsschutz beschichtetes Stahlmaterial nach Anspruch 1 oder 2, wobei ferner ein farbiger Anstrich auf die sauerstoffblockierende Harzschicht aufgetragen ist.

## Revendications

1. Matériau d'acier avec un revêtement anticorrosif à haute résistance comprenant :
un matériau d'acier,
une couche de conversion chimique ne contenant pas de chrome sur la surface du matériau d'acier,
une couche de revêtement anticorrosif à haute résistance en résine de polyuréthanne ou de polyurée appliquée sur la surface de la couche de conversion chimique, la couche de revêtement anticorrosif ayant une épaisseur de 0,5 à 6 mm, et
une couche de résine bloquant l'oxygène peinte sur la surface de la couche de revêtement anticorrosif, la couche de résine bloquant l'oxygène étant un film de peinture résinique formé d'une résine choisie dans le groupe consistant en polyol, polyuréthanne, polychlorure de vinylidène, alcool polyvinylique, époxy et leurs résines modifiées, la couche de résine bloquant l'oxygène ayant une épaisseur de 50 - 1000 µm, la couche de résine bloquant l'oxygène ayant une perméabilité à l'oxygène de 100 cm³ (standard) / m².jour.atm (20° C) ou moins.

2. Matériau d'acier avec un revêtement anticorrosif à haute résistance comprenant :
un matériau d'acier,
une couche de conversion chimique ne contenant pas de chrome sur la surface du matériau d'acier,
une couche de revêtement anticorrosif à haute résistance en résine polyoléfinique ou de copolymère polyoléfinique sur la surface de la couche de conversion chimique, la couche de revêtement anticorrosif ayant une épaisseur de 0,3 à 5 mm, et
une couche de résine bloquant l'oxygène sur la surface de la couche de revêtement anticorrosif à haute résistance, la couche de résine bloquant l'oxygène étant une feuille de résine collée à la couche de revêtement anticorrosif à haute résistance avec une couche d'adhésif, formée d'une résine choisie dans le groupe consistant en polychlorure de vinyle, polychlorure de vinylidène, polyester, polyamide et alcool polyvinylique et ayant une épaisseur de 10-500 µm, ou un film de peinture résinique formé d'une résine choisie dans le groupe consistant en polyol, polyuréthanne, polychlorure de vinylidène, alcool polyvinylique, époxy et leurs résines modifiées et ayant une épaisseur de 50 - 1000 µm, la couche de résine bloquant l'oxygène ayant une perméabilité à l'oxygène de 100 cm³ (standard) / m².jour.atm (20° C) ou moins.

3. Matériau d'acier avec un revêtement anticorrosif à haute résistance tel que revendiqué dans la revendication 1 ou 2, dans lequel la couche de résine bloquant l'oxygène a une perméabilité à l'oxygène de 40 cm³ (standard) / m².jour.atm (20° C) ou moins.

4. Matériau d'acier avec un revêtement anticorrosif à haute résistance tel que revendiqué dans la revendication 1 ou 2, dans lequel une couche de traitement de fond en résine est en outre formée entre la couche de conversion chimique et la couche de revêtement anticorrosif à haute résistance.

5. Matériau d'acier avec un revêtement anticorrosif à haute résistance tel que revendiqué dans la revendication 1 ou 2, dans lequel un matériau en feuille coloré est en outre empilé sur la couche de résine bloquant l'oxygène.

6. Matériau d'acier avec un revêtement anticorrosif à haute résistance tel que revendiqué dans la revendication 1 ou 2, dans lequel une peinture colorée est en outre appliquée sur la couche de résine bloquant l'oxygène.
